(19) **Europäisches Patentamt**

**European Patent Office**

**Office européen des brevets**

(11) Veröffentlichungsnummer: **0 199 391**

**A1**

(12) **EUROPÄISCHE PATENTANMELDUNG**

(21) Anmeldenummer: **86200469.4**

(22) Anmeldetag: **21.03.86**

(51) Int. Cl.⁴: **A61C 1/08**

(30) Priorität: **27.03.85 FR 8505017**

(43) Veröffentlichungstag der Anmeldung:
**29.10.86 Patentblatt  86/44**

(84) Benannte Vertragsstaaten:
**AT CH DE FR GB IT LI SE**

�];) Anmelder: **MICRO-MEGA S.A.**
**5-12, rue du Tunnel**
**F-25006 Besancon(FR)**

(72) Erfinder: **Boinot, Jean-Claude**
**Chaudefontaine**
**F-25640 Rouland(FR)**
Erfinder: **Jacoulet, Jean-Paul**
**99, rue des Granges**
**F-25000 Besancon(FR)**

(74) Vertreter: **Jörchel, Dietrich R.A. et al**
**c/o BUGNION S.A. Conseils en Propriété**
**Industrielle 10, route de Florissant Case**
**postale 375**
**CH-1211 Genève 12 Champel(CH)**

(54) **Zahnärtzliche Behandlungsvorrichtung mit einem Handstück.**

(57) Die Behandlungsvorrichtung weist ein Handstück mit wenigstens einer Glühbirne zur Beleuchtung der Behandlungsstelle, ein Anschlussteil (35) mit einer Batterie zur Speisung der Glühbirne und eine vom Handstück getrennte Aufladevorrichtung mit einem Sockel (60) auf. Das Anschlussteil hat an seinem hinteren Ende zwei axial vorspringende, federbelastete Kontakte (19, 22), welche bei am Handstück befestigtem Anschlussteil an zwei Schleifringen anliegen, die an der hinteren Stirnfläche des Handstücks vorgesehen sind und zum Speisestromkreis der Glühbirne gehören. Der Sockel (60) der Aufladevorrichtung hat auf seiner Oberseite eine Ausnehmung (61), welche einem an der Vorderseite des Anschlussteils (35) angeordneten Vorsprung (43) angepasst ist, und zwei konzentrisch zu dieser Ausnehmung (61) liegende Schleifringe (62, 63), welche die Ausgangsklemmen der Aufladevorrichtung bilden und in Anordnung und Durchmesser den Schleifringen an der Handstückrückseite entsprechen. Wenn das Anschlussteil (35) unter Eingriff seines Vorsprungs (43) in die Ausnehmung (61) auf den Sockel (60) gesetzt wird, gelangen die vorspringenden Kontakte (19, 22) automatisch mit den Schleifringen (62, 63) in Berührung, so dass die Batterie im Anschlussteil aufgeladen wird.

Fig. 5

Zahnärztliche Behandlungsvorrichtung mit einem Handstück

Die Erfindung bezieht sich auf eine zahnärztliche Behandlungsvorrichtung gemäss dem Oberbegriff des Patentanspruchs 1.

Es ist bereits eine zahnärztliche Handstückanordnung dieser Art durch die europäische Patentanmeldung mit der Veröffentlichungsnummer 143985 bekanntgeworden, bei der eine Glühlampe in einem Aufnahmeteil zwischen dem hinteren Ende des Handstücks und dem vorderen Ende eines einen Kleinmotor enthaltenden Anschlussteils installiert ist und das Licht dieser Glühlampe mit Hilfe von im Handstückkörper verlaufenden Lichtleitern übertragen wird, die sich bis zum Handstückkopf erstrecken und deren Enden in einer zur Beleuchtung der Behandlungsstelle geeigneten Lage ausgerichtet sind. Das Anschlussteil mit dem Kleinmotor kann abnehmbar am Aufnahmeteil befestigt werden und ist im montierten Zustand relativ zu diesem frei drehbar. Um die Stromzufuhr zum Aufnahmeteil über den gesamten Drehbereich zu gewährleisten, sind entweder am vorderen Ende des Anschlussteils oder am hinteren Ende des Aufnahmeteils konzentrische Schleifringe und an der Stirnfläche des anderen Teils elastiche, an diesen Schleifringen anliegende Kontakte vorgesehen. Die Speisung der Glühlampe erfolgt mit Hilfe einer äusseren Stromquelle, an welche die ganze Handstückanordnung mittels eines Versorgungsschlauchs angeschlossen ist, welcher auch die Versorgungsleitungen für den Kleinmotor enthält.

Es ist auch bereits ein zahnärztliches Turbinenhandstück mit einer in der Nähe des Handstückkopfs installierten Glühlampe bekannte - (EP-A-115934), welche durch Batterien gespeist wird, die im hinteren Teil des Handstückkörpers untergebracht sind. Die zum Antrieb der Turbine im Handstückkopf zugeführte Druckluft verläuft durch den die Batterien enthaltenden Hohlraum.

Ein zahnärztliches Handstück, welches mit einem elektrischen Kleinmotor zum Antrieb des Instruments, mit einer Beleuchtungseinrichtung und mit Batterien zur Speisung sowohl des Kleinmotors als auch der Beleuchtungseinrichtung ausgerüstet ist, wird in der US-PS 3.109.238 beschrieben.

Eine Speisung der Glühlampe eines zahnärztlichen Handstücks durch in der Handstückanordnung selber untergebrachte Batterien hat zwar den Vorteil der Unabhängigkeit von einer äusseren Stromquelle, was insbesondere bei Turbinenhandstücken oder aber bei durch einen Luftmotor angetriebenen Handstücken günstig ist, welche zum Betrieb des Instruments keine Stromzuführung benötigen, bringt jedoch den Nachteil mit sich, dass die Batterien ziemlich häufig ausgewechselt werden müssen. Wenn die Miniaturglühbirne, die beispielsweise mit 6 V betrieben wird, eine gute Beleuchtung der Behandlungsstelle gewährleisten soll, dann liefert die Batterie im allgemeinen einen hinreichend starken Strom lediglich während etwa zweier Stunden, so dass der Zahnarzt gezwungen ist, die Batterie häufig auszutauschen und möglicherweise deshalb eine Zahnbehandlung zu unterbrechen.

Der Erfindung liegt die Aufgabe zugrunde, diesen Nachteil zu vermeiden und eine Vorrichtung der im Oberbegriff des Anspruchs 1 beschriebenen Art so auszubilden, dass eine Batterie in der Handstückanordnung untergebracht werden kann und, wenn das Handstück nicht benutzt wird, sich auf einfache Weise aufladen lässt, so dass sie für eine folgende Zahnbehandlung mit einer hinreichenden Aufladung zur Verfügung steht.

Diese Aufgabe wird erfindungsgemäss durch die im Patentanspruch 1 angegebenen Merkmale gelöst.

Bei Verwendung einer derartigen Behandlungsvorrichtung braucht der Zahnarzt, nach Beendigung einer Behandlung bzw. bei einer Behandlungsunterbrechung und nachdem er das Handstück vom Anschlussteil abgenommen hat, dieses Anschlussteil lediglich in der vorgesehenen Weise auf der Aufladevorrichtung abzusetzen. Dabei erleichtert die Einfügung des am Anschlussteil vorgesehenen Vorsprungs in die Ausnehmung der Aufladevorrichtung die Ablage in derjenigen definierten Stellung, in welcher automatisch die Kontaktorgane des Anschlussteils elektrisch mit den Ausgangsklemmen der Aufladevorrichtung verbunden sind, deren Oberseite gleichzeitig den Ablageplatz für das Anschlussteil bildet. Wenn vorzugsweise das Anschlussteil ausserdem einen Kleinmotor zum Antrieb des im Handstückkopf eingesetzten Instruments enthält, dann bildet der erwähnte Vorsprung die bei derartigen Anschlussteilen bekannte rohrförmige Buchse, welche das Abtriebsende der Motorwelle umgibt und beim Einschieben ins Innere des Handstücks einen Führungsstutzen bildet.

Im allgemeinen sind die mit einem angetriebenen Handstück ohne grössere Unterbrechungen ausgeführten Zahnbehandlungen nur von verhältnismässig kurzer Dauer, so dass zwischendurch praktisch immer hinreichend lange Aufladezeiten zur Verfügung stehen und die Batterie stets einsatzbereit bleibt. Häufig beträgt die gesamte Behandlungszeit an einem Vormittag bzw.

an einem Nachmittag weniger als zwei Stunden, so dass es genügt, nach Beendigung der Sprechstunde mittags bzw. abends und nachts die Batterie von der Aufladevorrichtung aufladen zu lassen.

Das zahnärztliche Handstück ist vorzugsweise ein mit wenigstens einer Miniaturglühbirne ausgerüstetes Winkelstück, welches einen leicht vom Zahnarzt zu betätigenden Druckknopfschalter zum vorübergehenden Einschalten der Glühbirne aufweist, wobei dieser Druckknopf nach dem Loslassen automatisch den Speisestromkreis unterbricht; die Glühbirne ist also nur bei Bedarf, solange der Druckknopfschalter gedrückt wird, eingeschaltet. Dieses Winkelstück ist Gegenstand einer unter Beanspruchung des gleichen Prioritätstages eingereichten deutschen Parallelanmeldung der gleichen Anmelderin.

Die Aufladevorrichtung, die natürlich vorzugsweise direkt an das gewöhnliche Netz anschliessbar ist, kann zweckmässigerweise in die zahnärztliche Behandlungseinheit, und zwar in die zur Ablage der Handstücke vorgesehenen Aufnahmeeinrichtungen, integriert sein oder wird in deren Nähe installiert. Das Handstück kann von einem im Anschlussteil untergebrachten Kleinmotor angetrieben werden, bei dem es sich um einen elektrischen oder um einen Luft-Motor handelt, oder auch in herkömmlicher Weise mittels eines Riemen-und Rollensystems von einem äusseren Motor, wobei dann das Anschlussteil ausser der Batterie die Organe zur Bewegungsübertragung auf die Handstückwelle enthält. Das Handstück kann aber auch ein Turbinenhandstück sein, wobei das die Batterie enthaltende Anschlussteil zur Zuführung der Druckluft dient, die bis zum Handstückkopf geleitet werden muss.

Zweckmässige Ausgestaltungen der Erfindung ergeben sich aus den abhängigen Patentansprüchen.

Die Erfindung wird anhand der Zeichnung an einem Ausführungsbeispiel näher erläutert. Es zeigen:

Figur 1a den vorderen Teil eines Handstücks, im Längsschnitt,

Figur 1b den hinteren Teil dieses Handstücks, ebenfalls im Längsschnitt,

Figur 2 eine Draufsicht auf die rückwärtige Stirnseite des Handstücks im Sinne des Pfeils II nach Figur 1b,

Figur 3 einen Längsschnitt durch den vorderen Bereich des Anschlussteils,

Figur 3a einen Schnitt längs der Linie IIIa nach Figur 3,

Figur 4 einen Längsschnitt des hinteren Bereichs des Anschlussteils, in einer anderen Schnittebene als in Figur 3,

Figur 5 eine schematische Teilansicht der Aufladevorrichtung und des auf diese aufgesetzten Anschlussteils in seiner Aufladestellung, teilweise im Schnitt, und

Figur 6 das elektrische Schaltbild der Aufladevorrichtung.

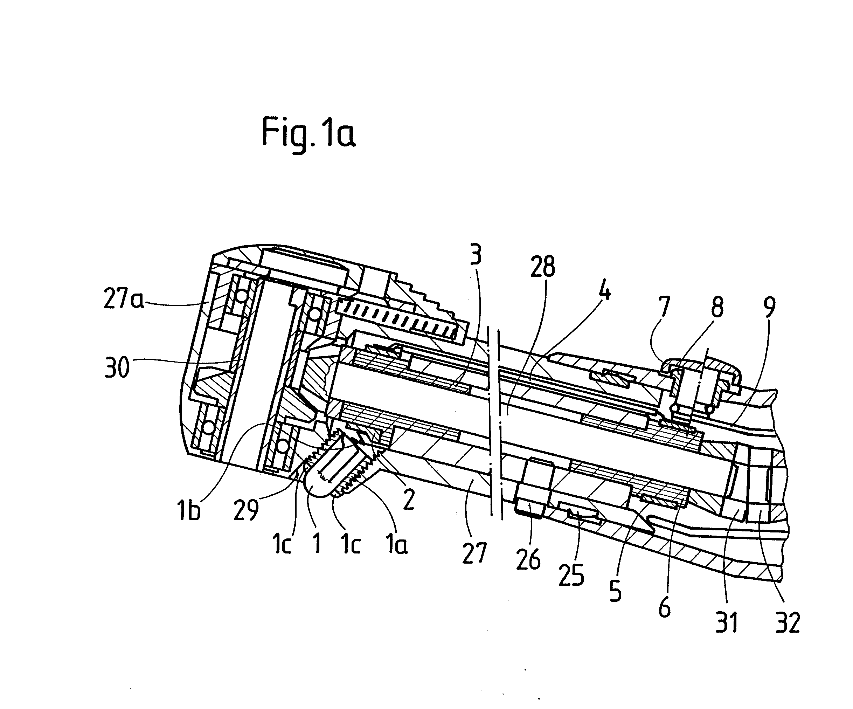

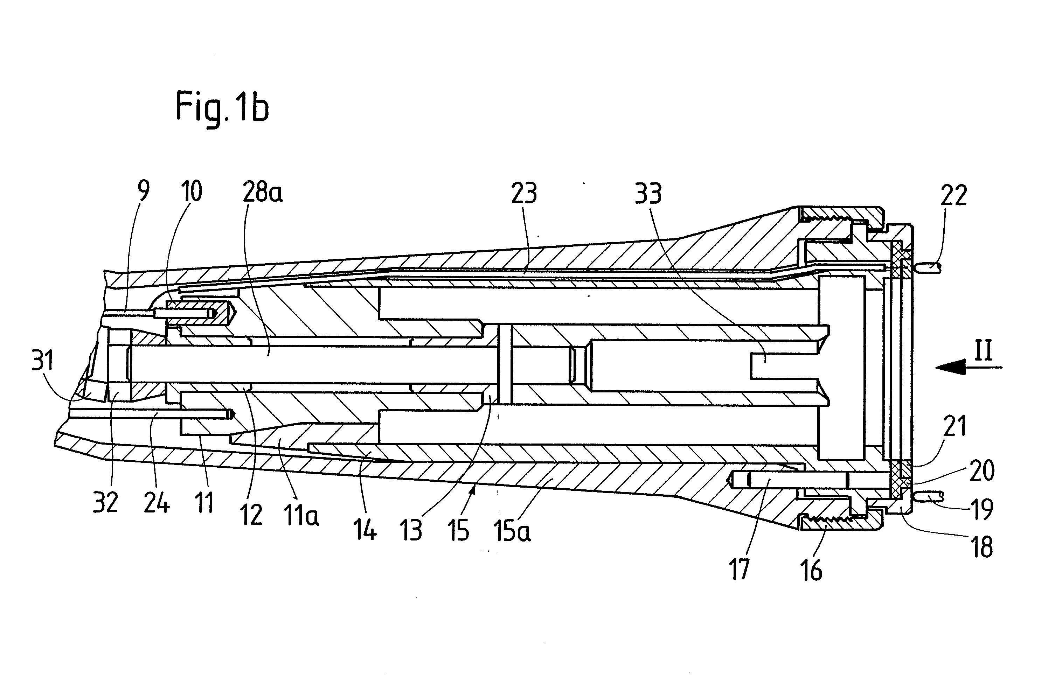

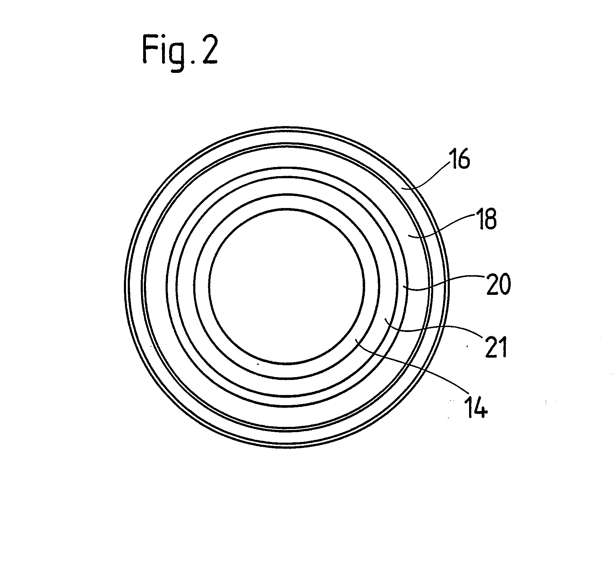

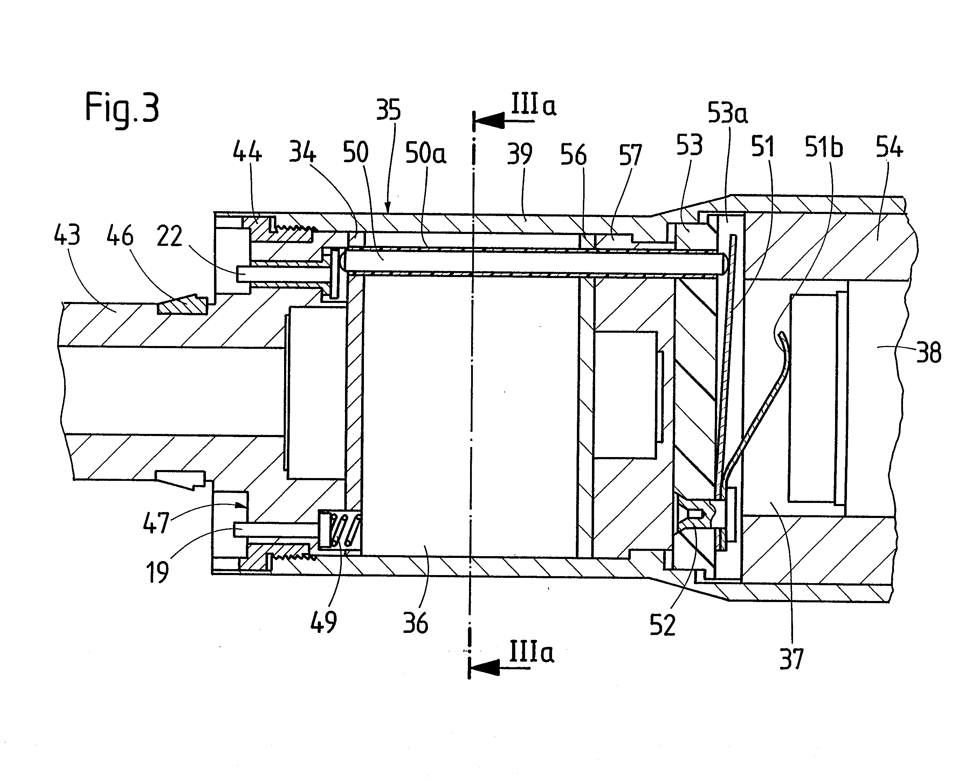

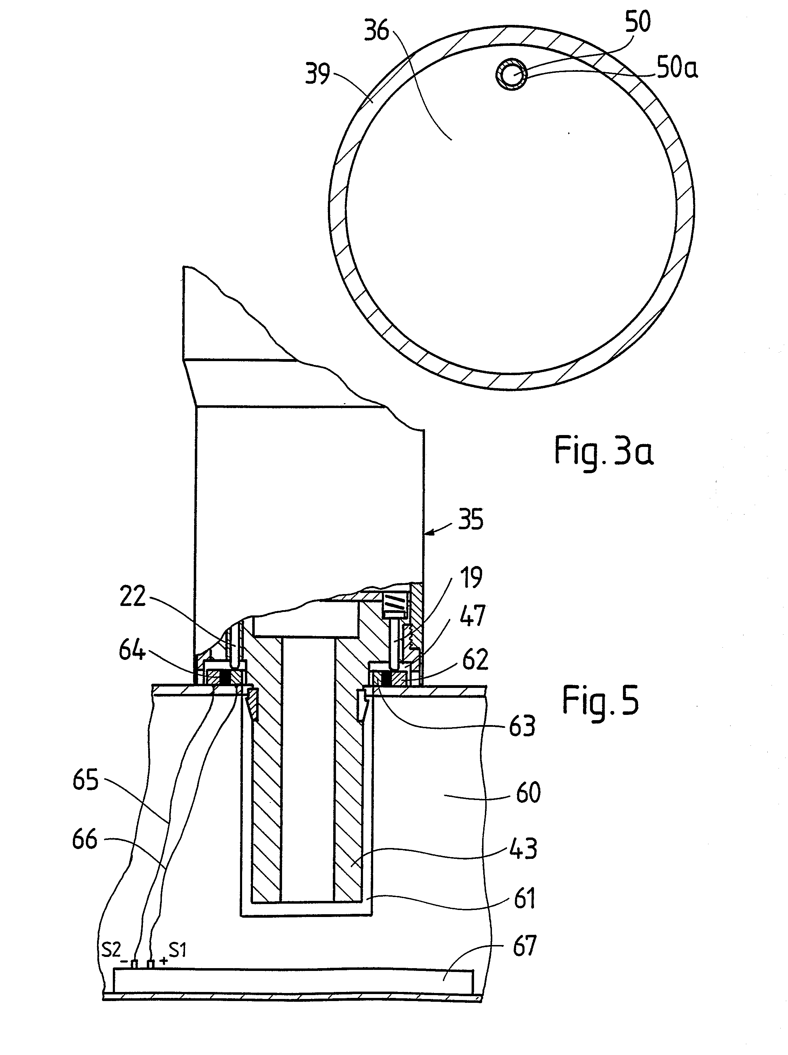

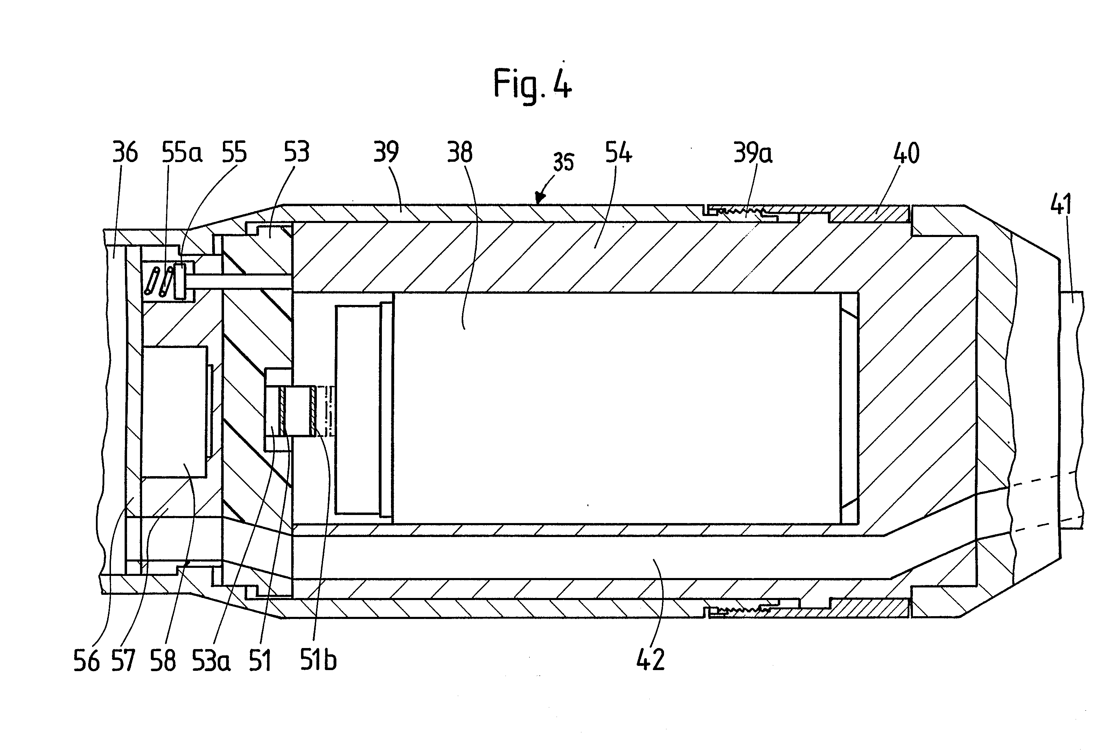

Nach den Figuren 1 und 2 besteht das Winkelstück aus einem Kopfteil 27 mit dem Winkelstückkopf 27a, in welchem ein nicht dargestelltes Behandlungsinstrument mittels einer Befestigungseinrichtung 30 eingesetzt werden kann, und aus einer Hülse 15, an welcher das Kopfteil 27 auswechselbar befestigt werden kann. Das Behandlungsinstrument wird in bekannter Weise durch eine drehbar im Kopfteil 27 gelagerte Welle 28 angetrieben, die an ihrem hinteren Ende mit einem Ritzel 31 versehen ist. In der Hülse 15 ist eine weitere Welle 28a drehbar gelagert, die an ihrem vorderen Ende ein mit dem Ritzel 31 der erst erwähnten Welle 28 kämmendes Ritzel 32 trägt. Die Welle 28a wird im betrachteten Beispiel durch einen Kleinmotor angetrieben, der in einem Anschlussteil 35, (Figuren 3 und 4) untergebracht ist, welches abnehmbar am hinteren Ende der Hülse 15 befestigt werden kann. In diesem Falle ragt eine am vorderen Ende des Kleinmotors vorstehende rohrförmige Buchse ins Innere der Hülse 15 hinein, und die Welle des Kleinmotors greift in die am hinteren Ende der Welle 28a angeformte Gabel 33 ein, so dass beide Wellen drehfest miteinander gekuppelt sind.

Das Kopfteil 27 sitzt im äusseren Hülsenteil 15a der Hülse 15, und wird durch einen Sicherungsring 25 fest an der Hülse 15 gehalten. Die relative Lage beider Teile ist dabei durch einen am Kopfteil 27 angebrachten Stift 26 festgelegt. Im Körper des Winkelstückkopfs 27a ist eine Ausnehmung 29 für eine Miniaturglühbirne 1 vorgesehen, die in einer leitenden Fassung 1a durch Kleben oder auf andere Weise befestigt ist. Diese Fassung 1a ist in den Körper des Winkelstückkopfs 27a eingeschraubt und auf ihrer äusseren Stirnfläche mit zwei Schlitzen 1c versehen, so dass sie einfach mit Hilfe eines geeigneten Schraubenziehers eingeschraubt beziehungsweise ausgeschraubt werden kann. Auf diese Weise lässt sich die Glühbirne 1 leicht auswechseln.

Die Neigung der Ausnehmung 29 in Bezug auf die Achse des Instruments ist so getroffen, dass das Licht der eingesetzten Glühbirne 1 auf das äussere Ende des Instruments, also auf die Behandlungsstelle gerichtet ist. Der Umfang des Glühbirnensockels, welcher den Masse-Pol bildet, ist, beispielsweise durch Löten, mit der Fassung 1a in Kontakt, welche ihrerseits mit dem Körper des aus Metall gefertigten und die Masse-Leitung bildenden Körpers des Kopfteils 27 in leitender Verbindung steht. Der den anderen Pol bildende Mittelkontakt 1b des Glühlampensockels liegt an einem metallischen Ring 2 an, der auf dem Umfang eines isolierenden Trägers 3 befestigt ist, welcher das vordere Lager der Welle 28 bildet oder zum Halten eines derartigen Lagers dient. Dieser metallische Ring 2 ist durch einen isolierten Draht 4 mit einem weiteren metallischen Ring 5 verbunden, welcher auf einem isolierenden Träger 6 befestigt ist; dieser Träger 6 bildet das hintere Lager der Welle 28 oder aber dient zum Halten eines derartigen Lagers. Die beiden Enden des Drahtes 4 sind an den Ringen 2 und 5 angelötet.

Der hintere metalische Ring 5 kann, wenn das Kopfteil 27 mit der Hülse 15 verbunden ist, mit einem elastischen Kontakt in Form einer Federlamelle 9 verbunden werden, deren rückwärtiges Ende im Innern der Hülse 15 in einem isolierenden Träger 10 sitzt, welcher seiner seits in den elektrisch leitenden Körper eines inneren Hülsenteils 11 der Hülse 15 eingepresst ist. Diese Federlamelle 9 erstreckt sich axial innerhalb der Hülse 15 und im Bereich ihrer Verbindung mit dem Kopfteil 27 und ist derart angeordnet, dass sich ihr vorderes Ende im kleinen radialen Abstand vom Ring 5 befindet. Ein durch einen Druckknopf gebildeter Schalter 7 durchsetzt eine Oeffnung im äusseren Hülsenteil 15a der Hülse 15 im Bereich des vorderen Endes der Federlamelle 9. Dieser Druckknopf ist radial in einer Buchse 8 verschiebbar, die in die erwähnte Oeffnung des äusseren Hülsenteils 15a eingepresst ist, und wird normalerweise durch die elastische Kraft der Federlamelle 9 in seinen angehobenen Ruhezustand gedrückt, in welchem die Federlamelle 9, wie in Fig. 1a für die rechte Hälfte des Schalters 7 gezeigt, vom metallischen Ring 5 abgehoben und damit der Stromkreis für die Glühbirne 1 unterbrochen ist. Die Federlamelle 9 fungiert also nicht nur als elektrischer Leiter, sondern auch als Rückstellfeder für den Schalter 7. Der Kopf des Druckknopfes überdeckt die Buchse 8, um ein Eindringen von Verunreinigungen in das Winkelstück zu verhindern.

Indem der Zahnarzt mit den Fingern seiner das Winkelstück haltenden Hand den Druckknopf eindrückt, bringt er die entsprechend gebogene Federlamelle 9 mit dem metallischen Ring 5 in Berührung, wie für die linke Hälfte der Schalter 7 gezeigt, und schaltet dadurch die Glühbirne 1 ein. Beim Loslassen des Druckknopfes wird die Glühbirne automatisch abgeschaltet. Auf diese Weise wird vermieden, dass bei Betrieb des Winkelstücks die Glühbirne ständig eingeschaltet ist und, falls eine Batteriespeisung vorgesehen ist, die Batterie unnötig entladen wird. Der Zahnarzt kann also auf einfache Weise nur bei Bedarf die Glühbirne 1 vorübergehend einschalten. Auch wird der Nachteil vermieden, dass beim Ablegen des Winkelstücks der Stromkreis geschlossen bleibt; vielmehr ist die Abschaltung der Glühbirne beim Ablegen des Winkelstücks automatisch gewährleistet. Andererseits kann jedoch die Glühbirne auch dann bei Bedarf eingeschaltet werden, wenn der das Instrument antreibende Motor nicht in Betrieb ist, was zur Inspektion der Behandlungsstelle sehr wichtig ist.

Die Federlamelle 9 ist elektrisch durch einen an sie angelöteten Draht 23, der von einer Isolierhülle umgeben ist und in einer auf einem inneren Hülsenteil 14 der Hülse 15 angebrachten Nut verläuft, mit einem elektrisch leitenden Schleifring 21 verbunden, der einen Teil der rückwärtigen Fläche der Hülse 15 bildet und die Hülsenachse konzentrisch umgibt.

Die Masseleitung des Glühbirnen-Stromkreises wird durch die beiden inneren Hülsenteile 11 und 14 gebildet, die aus einem leitenden Metall bestehen und innerhalb der Hülse 15 montiert sind. Das Hülsenteil 11 ist in das Hülsenteil 14 eingepresst, welches seinerseits mit schwacher Reibung im äusseren Hülsenteil 15a sitzt und durch eine hintere Mutter 16 befestigt ist, wobei ein in eine achsenparallele Oeffnung des äusseren Hülsenteils 15a eingreifender Stift 17 für eine definierte, drehfeste Verbindung beider Hülsenteile sorgt. Auf der rückwärtigen Fläche der Hülse 15 ist als Massekontakt ein weiterer Schleifring 18 in Form eines Metallrings angebracht, der auf den hinteren Bereich des Hülsenteils 14 aufgepresst ist, konzentrisch den anderen Schleifring 21 umgibt und einen isolierenden Ring 20 hält, der beide Schleifringe 18 und 21 voneinander iso liert und zur Befestigung des Schleifrings 21 dient.

Im inneren Hülsenteil 11 sind zwei Lager 12 und 13 für die Welle 28a montiert. Ausserdem ist im inneren Hülsenteil 11 ein Kanal für den Durchgang eines Kühlmittels vorgesehen, wobei dieser Kanal im betrachteten Beispiel durch einen metallischen Stopfen 11a verschlossen ist. Das äussere Hülsenteil 15a besteht beispielsweise aus einer Aluminiumlegierung.

Um eine gute elektrische Verbindung zwischen dem leitenden Körper des Kopfteils 27 und dem inneren Hülsenteil 11 der Hülse 15 zu gewährleisten, ist ein elastischer Kontakt 24 in Form eines sich axial erstreckenden leitenden Stifts vorgesehen, dessen rückwärtiges Ende im Hülsenteil 11 eingespannt ist und dessen vorderer Bereich derart abgewinkelt ist, dass er mit einer hinreichenden elastischen Vorspannung, also unter entsprechender Biegung, ständig an einer Schrägfläche des Körpers des Kopfteils 27 anliegt. Auf diese Weise wird ein einwandfreier elektrischer Kontakt gewährleistet.

Das beschriebene Winkelstück zeichnet sich durch einfache und zuverlässige elektrische Verbindungen zwischen seinen beiden Teilen aus, welche vom Zahnarzt auf einfache Weise rasch voneinander getrennt und zusammengesetzt werden können, indem das Kopfteil 27 durch einfachen Zug unter Biegung des Sicherheitsringes 25 aus der Hülse 15 herausgezogen beziehungsweise in diese Hülse 15 hineingeschoben werden kann, welche in Kombination mit verschiedenen Kopfteilen verwendbar ist. Ausserdem lässt sich die Hülse 15 durch Abschrauben der Mutter 16 zerlegen.

Das beschriebene Handstück ist dazu eingerichtet, durch einen elektrischen oder Luft-Kleinmotor angetrieben zu werden, welcher in einem Anschlussteil 35 (Figuren 3 und 4) untergebracht ist. Dieses Anschlussteil 35 kann in bekannter Weise abnehmbar am hinteren Ende des Handstücks befestigt werden und weist an seiner vorderen Stirnfläche zwei axial vorspringende, stiftförmige Kontakte 19 und 22 auf, die einer Federwirkung unterliegen und bei am Handstück befestigtem Anschlussteil gegen die beiden Schleifringe 18 und 21 an der rückwärtigen Fläche des Handstücks gedrückt werden. Auf diese Weise kann das Anschlussteil 35 relativ zum Handstück, unter Aufrechterhaltung einer zuverlässigen elektrischen Verbindung, frei gedreht werden. Als Stromquelle für die Glühbirne 1 dienen wieder aufladbare Batterien 38, die im Anschlussteil 35 untergebracht sind.

Im Beispiel nach den Figuren 3 und 4 enthält das Anschlussteil 35 zwischen zwei Flanschen 34 und 56 den Motorblock 36 des Kleinmotors und dahinter einen Raum 37 zur Aufnahme einer wieder aufladbaren Batterie 38. Dieser Raum 37 ist vorzugsweise so gemessen, dass fünf Batteriezellen mit einem Durchmesser von etwa 16 mm und einer Gesamtlänge von etwa 32 mm darin untergebracht werden können; eine solche 6 V-Batterie erzeugt ungefähr während zwei Stunden ein intensives Licht.

Das Anschlussteil 35 ist im wesentlichen aus einer Aussenhülse 39, einer in deren hinteren Bereich eingesetzten Innenhülse 54, die den Raum 37 zur Aufnahme der Batterie 38 begrenzt, und aus einer hinteren Gewindemuffe 40 zusammengesetzt, die auf ein Gewinde 39a am hinteren Ende der Aussenhülse 39 aufgeschraubt ist. Die Gewindemuffe 40 ist mit einem Ring zum Anschluss des Versorgungsschlauchs 41 versehen. Im betrachteten Beispiel sei angenommen, dass der Kleinmotor ein bekannter Luftmotor ist, dessen Schaufeln durch die von einem äusseren Kompressor herrührende und durch den Versorgungsschlauch 41 und die Hin-und Rückleitungen 42 (Figur 4) verlaufende Druckluft angetrieben werden.

Am vorderen Ende weist das Anschlussteil 35 einen durch eine Mutter 44 befestigten Vorsprung 43 in Form einer rohrförmigen Buchse auf, bei der es sich um die Nase des Kleinmotors handelt, welche von der nicht dargestellten Motorwelle durchsetzt wird. Beim Anschluss an das Handstück greift diese Nase in dessen rückwärtiges Ende ein und wird mit Hilfe eines bekannten Federhakens 46 befestigt, der in eine Ringnut am Innenumfang des inneren Hülsenteils 14 der Hülse 15 des Handstücks einrastet. Dabei wird das vordere Ende der Motorwelle drehfest mit der Gabel 33 am rückwärtigen Ende der Welle 28a dieser Hülse 15 gekuppelt. Auf seiner Vorderseite weist das Anschlussteil 35 eine den Vorsprung 43 umgebende, kreisringförmige Vertiefung 47 auf, in welche das rückwärtige Ende der Hülse 15 mit den Schleifringen 18 und 21 eingreift. An der den Boden der Vertiefung 47 bildenden kreisringförmigen Stirnfläche des Anschlussteils 35 springen axial die Kontakte 19 und 22 in Form von federbelasteten Stiften vor, die einen unterschiedlichen Abstand zur Achse des Anschlussteils derart haben, dass sie an den Schleifringen 18 und 21 anliegen, wie in Figur 1b angedeutet.

Der Kontakt 19, bei dem es sich um den Massekontakt handelt, unterliegt der Wirkung einer Feder 49. Das hintere Ende des anderen Kontakts 22 stützt sich am vorderen Ende eines leitenden Stifts 50 ab. Dieser Stift 50 ist von einer isolierenden Hülle 50a umgeben und liegt in einem achsenparallelen Kanal, welcher den Flansch 34, den Motorblock 36, den Flansch 56, ein Teil 57, welches das hintere Lager 58 des Kleinmotors trägt, und einen Isolierring 53 durchsetzt. Das hintere Ende des Stifts 50 stützt sich gegen eine elastische, metallische Lamelle 51 ab, die in einer Nut 53a des Isolierrings 53 angeordnet ist. Diese Lamelle 51 ist durch einen Niet 52, welcher in einer Oeffnung des Isolierrings 53 sitzt, mit einer weiteren elastischen Lamelle 51b verbunden, welche den elektrischen Kontakt zum positiven Pol der Batterie 38 herstellt und mit der Lamelle 51 eine Doppellamelle bildet. Die Lamelle 51 stösst den verschiebbaren Stift 50 axial nach vorn, so dass dieser seinerseits den Kontakt 22 nach vorn drückt, der somit elastisch am Schleifring 21 anliegt.

Der andere Kontakt 19 steht über den leitenden Motorblock 36, den metallischen Flansch 56, eine zwischen diesem Flansch 56 und dem Kopf eines Kontaktstifts 55 (Figur 4) angeordnete Feder 55a, diesen Kontaktstift 55 sowie die metallische innere Hülse 54, an welcher der Kontaktstift 55 anliegt, mit dem negativen Pol der Batterie 38 in Verbindung, an welchem der Boden der inneren Hülse 54 anliegt. Bei fest auf das hintere Ende der Aussenhülse 39 augeschraubter Muffe 40 wird die innere Hülse 54 axial nach vorn gepresst, wodurch einerseits die Batterie 38 mit ihren vorderen positiven Pol gegen die elastische Lamelle 51b gedrückt und andererseits die Feder 55a durch den Kontaktstift 55 komprimiert wird, so dass eine gute leitende Verbindung zwischen der inneren Hülse 54 und dem Flansch 56, an welchem der Motorblock 36 anliegt, gewährleistet ist.

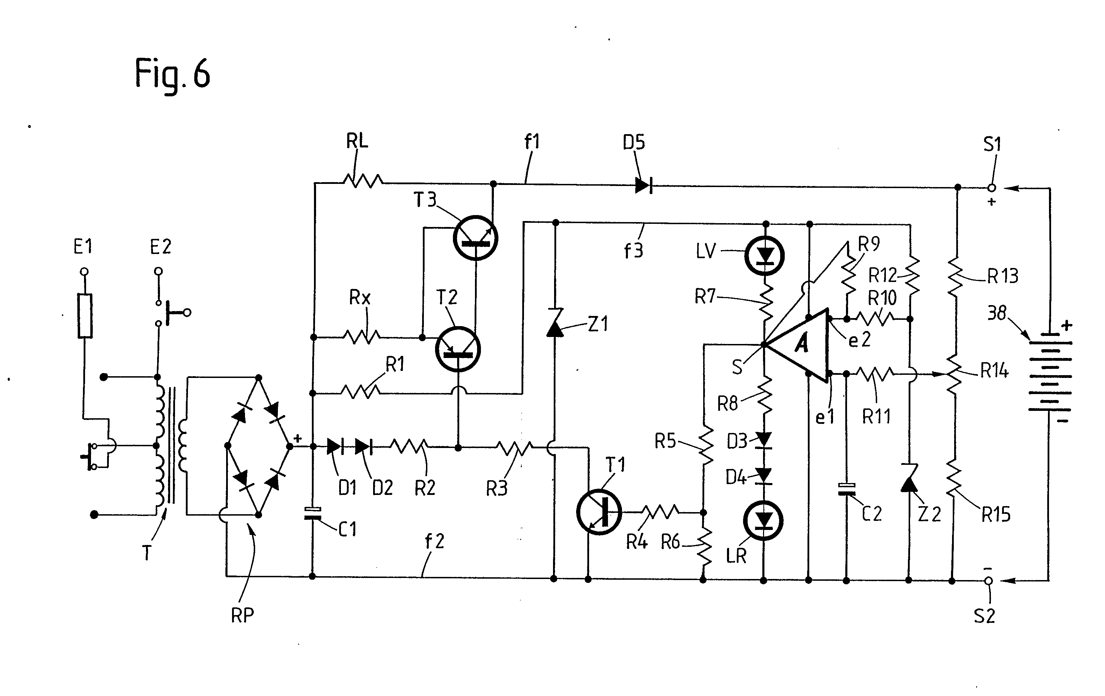

Bei Nichtbenutzung des Handstücks wird das von diesem abgenommene Anschlussteil 35 auf eine in Figur 5 schematisch gezeigte Aufladevorrichtung gesetzt, die einen Sockel 60 mit einer an seiner Oberseite vorgesehenen runden Ausnehmung 61 aufweist. Durchmesser und Tiefe dieser Ausnehmung 61 sind den Abmessungen des Vorsprungs 43 des Anschlussteils 35, also im betrachteten Beispiel der Nase des Kleinmotors, angepasst. Auf der Oberseite des Sockels 60 sind zwei die Ausnehmung 61 konzentrisch umgebende Schleifringe 62 und 63 angeordnet, welche durch einen Isolierring 64 voneinander getrennt sind und deren Durchmesser denen der Schleifringe 18 und 21 am Handstück entsprechen. Wenn daher, wie in Figur 5 veranschaulicht, das Anschlussteil 35 unter Eingriff seines Vorsprungs 43 in die Ausnehmung 61 mit seinem die Vertiefung 47 umgebenden Rand auf die Oberseite des Sockels 60 aufgesetzt wird, dann kommen die vorspringenden Kontakte 19 und 22 des Anschlussteils 35 automatisch mit den Schleifringen 62 und 63 in Berührung, wobei es auf die winkelmässige Orientierung des Anschlussteils 35 relativ zum Sockel 60 nicht ankommt, so dass der Zahnarzt beim Aufsetzen des Anschlussteils 35 auf die Aufladevorrichtung nicht auf eine besondere Orientierung des Anschlussteils zu achten braucht. Die Schleifringe 62 und 63, welche die Ausgangsklemmen der Aufladevorrichtung bilden, sind durch Leiter 65 und 66 an die Ausgangsklemmen S2 und S1 der in Figur 6 näher gezeigten Schaltungsanordnung 67 zur Aufladung angeschlossen.

Diese Schaltungsanordnung weist zwei Eingangsklemmen E1 und E2 auf, die an das Netz angeschlossen werden können und mit einem Transformator T verbunden sind, welcher auf eine Netzspannung von 110 V oder 220 V einstellbar ist. Dieser Transformator T speist eine Gleichrichterbrücke RP, die ihrerseits an eine integrierte Konstantstrom-Schaltung angeschlossen ist, welche jedoch zwei verschiedene Stromstärken für eine rasche und für eine langsame Aufladung der Batterie 38 liefern kann. Diese integrierte Schaltung weist einen als Spannungsvergleicher fungierenden Operationsverstärker A auf und hat die Ausgangsklemmen S1 und S2, welche, wie erwähnt, an die Schleifringe 63 und 62 des Sockels 60 angeschlossen sind.

Ein Kondensator C1 ist zwischen die negative Klemme der Gleichrichterbrücke RP und deren positive Klemme geschaltet. Die negative Klemme ist mittels einer Leitung f2 an die negative Ausgangsklemme S2 angeschlossen. Die positive Klemme der Gleichrichterbrücke RP ist an einen pnp-Transistor T2 angeschlossen, in dessen Emitterkreis ein Widerstand Rx liegt und der in Kaskade mit einem npn-Transistor T3 geschaltet ist. Der Emitter des Transistors T3 ist über eine Leitung f1, die eine Diode D5 enthält, an die positive Ausgangsklemme S1 angeschlossen. Die Diode D5 - schützt die Schaltung gegen eine Umkehr der Batteriepolarität. Dem Widerstand Rx und dem Transistor T3 ist ein Widerstand RL parallelgeschaltet.

Im Basiskreis des Transistors T2 sind in Reihe zwei Dioden D1 und D2 sowie ein Widerstand R2 geschaltet, welche eine geeignete Vorspannung für den Transistor T2 erzeugen, und dem Widerstand R2 ist ferner ein Widerstand R3 nachgeschaltet, der an den Kollektor eines npn-Transistors T1 angeschlossen ist. Die Basis dieses Transistors T1 ist über einen Widerstand R4 an einen Spannungsteiler angeschlossen, der von den Widerständen R5 und R6 gebildet ist, die ihrerseits mit dem Ausgang S des Operationsverstärkers A verbunden sind.

Dieser Operationsverstärker A erhält seine Betriebsspannung von der positiven Klemme der Gleichrichterbrücke RP über einen Widerstand R1 und die Leitung f3. Eine Zener-Diode Z1, welche zwischen der Leitung f3 und der Leitung f2 liegt, sorgt für eine konstante Betriebsspannung. Die Speiseklemmen des Operationsverstärkers A sind an die Leitungen f3 und f2 angeschlossen. Sein Ausgang S ist mit einem Spannungsteiler verbunden, welcher aus einer zwischen den Leitungen f2 und f3 liegenden Serienschaltung aus einer ersten Anzeigelampe LV, einem Widerstand R7, einem Widerstand R8, zwei Dioden D3 und D4, die für einen konstanten Spannungsabfall sorgen, sowie einer zweiten Anzeigelampe LR besteht; der Ausgang S ist zwischen die beiden Widerstände R7 und R8 geschaltet. Bei den Anzeigelampen handelt es sich z.B. um Leuchtdioden (LED).

Der Operationsverstärker A hat zwei Eingänge e1 und e2:

Der Eingang e1 ist über einen Widerstand R11 an einen zwischen den Ausgangsklemmen S1 und S2 liegenden Spannungsteiler geschaltet, der aus einem Widerstand R13, einem Potentiometer R14 und einem Widerstand R15 besteht. Der Abgriff des Potentiometers ist mit dem Eingang e1 verbunden. Zwischen diesem Eingang e1 und der Leitung f2 liegt ein Kondensator C2.

Der andere Eingang e2 ist über einen Widerstand R10 an einen zwischen den Leitungen f3 und f2 liegenden Spannungsteiler geschaltet, der aus einem Widerstand R12 und einer Zener-Diode Z2 besteht, die für einen konstanten Spannungsabfall und damit eine konstante Spannung am Eingang e2 sorgt.

Der Operationsverstärker A ist dazu eingerichtet, die Spannung an der Batterie 38, die zwischen die beiden Klemmen S1 und S2 geschaltet ist, mit einem Spannungsschwellwert zu vergleichen, welcher durch den das Potentiometer R14 enthaltenden Spannungsteiler bestimmt und durch dieses Potentiometer R14 einstellbar ist. Die beschriebene Schaltungsanordnung arbeitet folgendermassen:

Wenn die Spannung der Batterie schwach ist, wenn also der Strom zwischen den Ausgangsklemmen S1 und S2 über den Widerstand 13, das Potentiometer 14 und den Widerstand 15 klein ist, dann ist das am Potentiometer R14 abgegriffene und am Eingang e1 des Operationsverstärkers A herrschende Potential negativer als das Potential am andern Eingang e2. Der Ausgang S dieses Operationsverstärkers ist dann positiv, und der Strom verläuft über die Anzeigelampe LR, bei der es sich beispielsweise um eine rote Anzeigelampe handelt, welche einen starken Ladestrom signalisiert; die andere Anzeigelampe LV, bei der es sich beispielsweise um eine grüne Anzeigelampe handelt, bleibt ausgeschaltet. Der über die Widerstände R5 und R6 verlaufende Strom erzeugt eine Vorspannung am Transistor T1, durch welche dieser und die Transistoren T2 und T3 in den leitenden Zustand geschaltet werden. Unter diesen Bedingungen verläuft der Ladestrom über den Widerstand Rx und den Transistor T3, wobei dieser Widerstand Rx so dimen sioniert ist, dass ein verhältnismässig starker Ladestrom von beispielsweise 12 mA fliesst, welcher die Batterie über die Ausgangsklemmen S1 und S2 rasch auflädt.

Wenn andererseits die Batteriespannung gross ist, dann ist das am Potentiometer R14 abgegriffene Potential, welches am Eingang e1 herrscht, positiver als das Potential am andern Eingang e2, und der Ausgang S des Operationsverstärkers A ist negativ, so dass nunmehr ein Strom über den anderen Zweig des Spannungsteilers, das heisst über die Anzeigelampe LV, welche aufleuchtet, und den Widerstand R7 fliesst. Die Vorspannung an der Basis des Transistors T1 verschwindet, so dass dieser Transistor sowie die Transistoren T2 und T3 sperren. Ein verhältnismässig kleiner Ladestrom von beispielsweise 6 mA verläuft nunmehr über den Widerstand RL und die Diode D5 zur Ausgangsklemme S1, wodurch die Batterie nur noch langsam geladen wird. Dieser Zustand wird durch das grüne Licht der Anzeigelampe LV angezeigt.

Die Erfindung ist nicht auf die beschriebene Ausführungsform beschränkt, sondern lässt hinsichtlich der Ausbildung des Handstücks, des Anschlussteils und der Aufladevorrichtung mit ihrer Schaltungsanordnung mannigfache Varianten zu. Beispielsweise brauchen die Schleifringe 18 und 21 am Handstück sowie die Schleifringe 62 und 63 am Sockel 60 der Aufladevorrichtung nicht in einer Ebene zu liegen, sondern können in axial stufenweise versetzten Ebenen liegen. Diese Schleifringe können auch axial versetzt auf einer innerhalb des Handstücks bzw. am Sockel 60 vorgesehenen Umfangsfläche liegen, wobei dann die an diesen Schleif ringen anliegenden Kontakte entsprechend radial vorspringen.

Anstelle eines Luft-Kleinmotors kann das Anschlussteil auch einen bekannten elektrischen Kleinmotor enthalten. Wenn das Handstück in herkömmlicher Weise von einem äusseren Motor über ein Riemen-Laufrollen-System angetrieben wird, dann enthält das Anschlussteil ausser der Batterie lediglich die Organe zur Umwandlung und zur Uebertragung der Bewegung auf die Handstückwelle. Beim Handstück kann es sich auch um ein Turbinenhandstück handeln, in diesem Falle dient das die Batterie enthaltende Anschlussteil zur Zuführung der Druckluft.

**Ansprüche**

1. Zahnärztliche Behandlungsvorrichtung mit einem Handstück (15,27), das mit wenigstens einer Glühbirne (1) zur Beleuchtung der Behandlungsstelle ausgerüstet ist, und mit einem am Handstück lösbar befestigbaren Anschlussteil (35), welches am vorderen Ende einen ins Innere des Handstücks eingreifenden Vorsprung (43) aufweist, wobei am hinteren Ende des Handstücks und am vorderen Ende des Anschlussteils je ein Paar von zum Speisestromkreis der Glühbire (1) gehörenden Kontaktorganen angebracht ist, welche derart ausgebildet und angeordnet sind, dass sie die elektrische Verbindung zwischen Handstück und Anschlussteil herstellen, wenn diese beiden Teile zusammengesetzt sind, dadurch gekennzeichnet, dass das Anschlussteil (35) zur Aufnahme wenigstens einer wiederaufladbaren Batterie (38) eingerichtet ist, deren Pole mit den beiden Kontaktorganen (19,22) am vorderen Ende des Anschlussteils - (35) verbunden sind, und dass eine elektrische Aufladevorrichtung vorgesehen ist, deren Oberseite einerseits mit einer an den erwähnten Vorsprung - (43) des Anschlussteils (35) angepassten Ausnehmung (61) und andererseits mit zwei, die Ausgangsklemmen bildenden Kontaktorganen (62,63) versehen ist, welche so angeordnet und ausgebildet sind, dass sie beim Aufsetzen des Anschlussteils (35) auf die Oberseite der Aufladevorrichtung, unter Eingriff des Vorsprungs (43) in die erwähnte Ausnehmung (61), mit den entsprechenden Kontaktorganen (19,22) am vorderen Ende des Anschlussteils (35) in Berührung gelangen.

2. Zahnärztliche Behandlungsvorrichtung nach Anspruch 1, dadurch gekennzeichnet, dass die Kontaktorgane am vorderen Ende des Anschlussteils (35) vorspringende und einer Federwirkung unterliegende Kontakte (19,22) und die Kontaktorgane am hinteren Ende des Handstücks sowie auf der Oberseite der Aufladevorrichtung getrennte Schleifringe (18,21;62,63) sind, an denen die vorspringenden Kontakte (19,22) jeweils anliegen.

3. Zahnärztliche Behandlungsvorrichtung nach Anspruch 2, dadurch gekennzeichnet, dass die Schleifringe (18, 21; 62,63) konzentrisch an der hinteren Stirnfläche des Handstücks bzw. auf der oberen, als Auflagefläche dienenden Fläche der Aufladevorrichtung, die Ausnehmung (61) umgebend, angeordnet sind und die vorspringenden Kontakte - (19,22) federbelastete Stifte an der den Vorsprung - (43) umgebenden Stirnfläche des Anschlussteils - (35) sind.

4. Zahnärztliche Behandlungsvorrichtung nach einem der Ansprüche 1 bis 3, mit einem im Anschlussteil (35) untergebrachten Kleinmotor zum Antrieb des im Handstückkopf einsetzbaren Behandlungsinstruments, dadurch gekennzeichnet, dass die Batterie (38) in einem hinter dem Motorblock (36) des Kleinmotors angeordneten Hohlraum angeordnet ist, dass die Masse-Leitung leitende Bestandteile des Anschlussteils (35) einschliesslich einer inneren, die Batterie (38) aufnehmenden Hülse (54) und den Motorblock selber einschliesst und dass die andere elektrische Leitung eine elastische Doppellamelle (51,51b) enthält, deren eine Lamelle (51b) am positiven Pol der Batterie (38) anliegt und deren andere Lamelle (51) gegen das rückwärtige Ende eines leitenden Stifts (50) drückt, welcher, mit einer Isolierung umgeben, einen achsenparallelen Kanal des Motor blocks (36) durchsetzt und dessen vorderes Ende am hinteren Ende eines der erwähnten vorspringenden Kontakte (22) anliegt und diesen unter Wirkung der letzterwähnten Federlamelle (51) axial nach vorn drückt.

5. Zahnärztliche Behandlungsvorrichtung nach einem der Ansprüche 1 bis 4, dadurch gekennzeichnet, dass die Aufladevorrichtung eine Schaltungsanordnung mit automatischer Umschaltung zwischen schneller Aufladung und langsamer Aufladung in Abhängigkeit von der zwischen den Polen der angeschlossenen Batterie herrschenden Spannung aufweist und diese Schaltungsanordnung mit einem Operationsverstärker (A) versehen ist, der dazu eingerichtet ist, die Spannung der Batterie mit einer einstellbaren Schwellspannung zu vergleichen und zwei Betriebszustände in Abhängigkeit von der Batteriespannung einzunehmen, wobei im einen Betriebszustand ein starker Aufladestrom und im anderen Betriebszustand ein schwacher Aufladestrom erzeugt wird.

6. Zahnärztliche Behandlungsvorrichtung nach Anspruch 5, dadurch gekennzeichnet, dass die Aufladevorrichtung zwei Anzeigelampen (LV,LR), vorzugsweise Leuchtdioden, verschiedener Farbe aufweist, von denen die eine Anzeigelampe im einen Betriebszustand des Operationsverstärkers (A) und die andere Anzeigelampe im anderen Betriebszustand des Operationsverstärkers eingeschaltet ist.

# Fig.1a

27a

30

1b 29

1c 1 1c 1a

27 26 25 5 6 31 32

3 28 4 7 8 9

2

0 199 391

Fig.1b

# Fig. 2

Fig.3

0 199 391

0 199 391

Fig. 3a

Fig. 5

Fig. 4

# Fig.6

0 199 391

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | US-A-3 109 238 (MARKS)<br><br>* Spalte 2, Zeilen 39-50; Figuren 1,2 *<br><br>--- | 1,2,3,4 | A 61 C 1/08 |
| Y | FR-A-2 551 652 (STROHMAIER)<br><br>* Seite 6, Zeilen 11-22; Figur 9 *<br><br>--- | 1,2,3,4 | |
| A | FR-A-1 161 157 (FRANK)<br>* Figur 7 *<br><br>--- | 1,2 | |
| A,D | EP-A-0 143 985 (SIEMENS)<br>* Figuren 7,9 *<br><br>--- | 2 | |
| A,D | EP-A-0 115 934 (MELLER)<br>* Zusammenfassung; Figur 2 *<br><br>--- | 1 | RECHERCHIERTE SACHGEBIETE (Int. Cl.4) |
| A | DE-B-1 032 882 (A. MAIER)<br>* Spalte 1, Zeilen 32-36; Figur 1 *<br><br>----- | 1 | A 61 C |

Der vorliegende Recherchenbericht wurde für alle Patentansprüche erstellt.

| Recherchenort<br>DEN HAAG | Abschlußdatum der Recherche<br>26-06-1986 | Prüfer<br>EHRSAM F.J.A. |
|---|---|---|